Europäisches Patentamt

European Patent Office

Office européen des brevets

(11) Publication number: **0 210 750**
**A2**

# EUROPEAN PATENT APPLICATION

(21) Application number: 86304922.7

(22) Date of filing: 25.06.86

(51) Int. Cl.⁴: **C 08 K 5/10**
**C 08 L 23/12**

(30) Priority: 26.06.85 US 749031

(43) Date of publication of application:
04.02.87 Bulletin 87/6

(84) Designated Contracting States:
BE CH DE FR GB IT LI NL SE

(71) Applicant: HERCULES INCORPORATED
Hercules Plaza
Wilmington Delaware 19894(US)

(72) Inventor: Berta, Dominic Andrew
2626 E. Robino Drive Sherwood Park I
Wilmington Delaware 19808(US)

(72) Inventor: Cooper, Scott Daniel
18907 Sandia Pines
Humble Texas 77346(US)

(74) Representative: De Minvielle-Devaux, Ian Benedict
Peter et al,
CARPMAELS & RANSFORD 43, Bloomsbury Square
London WC1A 2RA(GB)

(54) Antistatic heat sealable film.

(57) This invention provides a polymer formulation suitable for preparing a heat sealable polypropylene film and a biaxially oriented polypropylene film prepared therewith. The polymer formulation of the invention is a film-forming polymer of propylene made up of a resin mixture consisting of about 86 to about 91% polypropylene; about 9 to about 14% hard resin, said resin mixture being compounded with about 0.05 to about 0.08% of behenate glyceride (GMB), preferably from about 0.05 to about 0.6%; and about 0 to about 0.8% of wax.

EP 0 210 750 A2

Croydon Printing Company Ltd.

This invention relates to a novel heat-sealable polypropylene film having improved antistatic properties and to the use of said composition in heat sealable films.

It has been known for some time that heat-sealable polypropylene films can be prepared from a composition wherein about 6 to 20% by weight of a hard resin is incorporated into the polypropylene. For example, U.S. Patent No. 3,361,849 discloses a film-forming composition containing polypropylene and 1 to 60% of a compatible hydrocarbon polymer having a drop softening point above about 70°C, an average molecular weight of at least 500 (Rast) and an iodine value less than about 50. Another film-forming composition disclosed in U.S. Patent No. 3,656,836 contains polypropylene and 5 to 40% of a styrene polymer having a number average molecular weight distribution predominantly between 600 and 20,000. Although such films have been highly successful in the marketplace, they are subject to the serious drawback that they cannot dissipate a static charge. Accordingly, dust accumulates and is retained on the surface of items packaged with such films and is not easily removed.

The tendency to accumulate a static charge is, as is well known, a characteristic of all synthetic polymers and is particularly bad with polypropylene due to its nonpolar nature. For many applications, e.g. textile fibers and molded objects, the problem can be overcome or meliorated by inclusion of antistatic agents in the polymer formulation.

This approach has also been found satisfactory with composite or laminar films wherein a coating of a predominantly propylene-olefin copolymer is applied to a polypropylene core as a heat sealable layer.

The most popular antistatic materials are the fatty acid monoesters and polyesters of glycerine, particularly those of 12 to 23 carbon fatty acids, preferably the stearic acid esters. Other common antistatic agents are ethoxylated amine salts, sulfonic acids and aryl-alkyl-sulfonates, and phosphoric acid ester amides.

The use of internal antistatic agents has not been successful, however, with heat-sealable polypropylene films made from propylene polymer compositions containing hard resins as disclosed in the previously mentioned U.S. Patent Numbers 3,361,849 and 3,666,836.

This is doubtless due to the fact that, in order to be effective, the antistatic additive must migrate to the surface of the film. The presence of the additive on the surface of the area to be heat sealed is highly detrimental to heat sealing.

Such films have also been found to be lacking in satisfactory printability. U.S. Patent No. 4,032,493 discloses a film-forming composition that contains a minor amount of a hydrocarbon wax as well as the hard resin for making polypropylene films that have improved printability as well as being heat-sealable, after conventional exposure to a corona discharge.

According to the invention, a film-forming propylene polymer composition suitable for preparing a heat sealable polypropylene film and containing a propylene polymer and about 9 to about 14% by weight of a hard resin, and optionally a hydrocarbon wax, is characterized in that the composition comprises about 86 to about 91% by weight of polypropylene, about 9 to about 14% by weight of of a hard resin, and about 0.05 to about 0.8 %, based on the weight of the composition, of a monoglyceride, a diglyceride, or a mixture of mono- and diglycerides, of behenic acid.

Behenic acid is the saturated straight chain fatty acid having 22 carbon atoms. It is also known as docosanoic acid.

Behenic acid and its unsaturated precursor occur in nature in rapeseed oil and in certain marine fats. The behenic acid glycerides used in the polymer composition according to the invention are prepared by hydrogenating the precursor material and thereafter glycerinating it to the desired level according to known techniques. Preferably the product derived from rapeseed oil is used because it is safe for food use. This material is essentially a 50/50 mixture of the mono- and diglycerides.

Any low molecular weight hydrocarbon wax can be used as the optional hydrocarbon wax component of the composition. It serves as a friction-reducing or slip agent, but the glycerol behenate in the composition itself imparts improved antifriction and slip properties to the film made from it. The hydrocarbon wax is not required in order to achieve satisfactory printability by conventional ink formulations of the film made from the composition according to the invention and, in fact, it tends to be detrimental to printability.

When used herein the term polypropylene includes propylene polymers generally, both propylene homopolymer and copolymers that share with polypropylene the tendency to accumulate a static charge and consist predominantly of propylene and contain up to about 20% of ethylene or another alpha-olefin of 4 to 6 carbon atoms. Typical of such materials are propylene-ethylene and propylene-butene copolymers and propylene-ethylene-butene terpolymers. The most widely used such copolymer is a propylene-ethylene copolymer having about 10% ethylene or less and preferably 7% or less of the comonomer content as determined by IR spectroscopy.

The most preferred polymer for use in the formulations of this invention is homopolypropylene.

When used herein the term hard resins means amorphous, hard, brittle hydrocarbon resins having a low enough molecular weight to be compatible with polypropylene. They have a drop softening point above about 70°C, an average molecular weight of at least 500 (Rast) and an iodine value less than about 50.

0210750

Such hard resins can be hydrogenated polymers of styrene, alpha-methyl styrene or vinyl toluene, or copolymers of styrene, alpha-methyl styrene or vinyl toluene with each other. They can also be copolymers of styrene, alpha-methyl styrene or vinyl toluene with terpenes such as, e.g., dipentene, carene, pinene, terpinene, limonene, turpentine, allo-ocimene or terpinolene. They can also be copolymers of one of the styrenes with an aliphatic alpha-olefin or a diene such as ethylene, propylene, butene-1 or butadiene.

Another class of resins that are useful as the hard resin component are dimers and higher polymers obtained by polymerization and copolymerization of terpene hydrocarbons such as acyclic, monocyclic, and bicyclic monoterpenes and mixtures thereof followed by hydrogenation. Dipentene, pinene, carene, allo-ocimene, terpinene, terpinolene and limonene are examples of usable terpenes. Another class of hard resins includes polymers obtained by hydrogenating resinous polymerization products produced by catalytic polymerization of mixed unsaturated monomers derived from the deep cracking of petroleum.

As indicated in Example 1 of the above-mentioned U.S. Patent No. 4,032,493, it is customary to subject films prepared from a film-forming composition containing a hard resin to a corona discharge treatment after biaxial orientation. The need for a corona discharge treatment also applies to films made from the resin formulations of this invention. The corona treatment is effected in the same way and at substantially the same treatment levels as have been conventional in the past. The corona treatment has little or no effect either way on the tendency to accumulate a static charge.

The corona treatment of films based on the compositions of the invention leads to improved printability with conventional ink formulations. This characteristic of the compositions of the invention improves the ability of films prepared from hard resin-containing formulations to be printed and decorated for use as a primary wrapping material, instead of as protective or barrier overwraps over other packaging materials on which eye-catching product identification indicia, use instructions, or the like are printed.

The removal of wax or the reduction in wax content, as the case may be, in the compositions from the higher levels (up to 5% based on the polypropylene content) used in U.S. Patent No. 4,032,493, for instance, affords good heat sealing properties. Heat sealing temperature requirements are increased slightly, but the range of usable heat seal temperatures remains broad enough for all purposes. Initial heat seal strengths are substantially unreduced from those experienced with the conventional hard resin formulations.

The resin formulations of this invention are intended primarily for the production of biaxially oriented wrapping films. Films can be prepared by either of the conventional techniques, i.e., the blown bubble or the tenter technique. As happens with any change in resin formulations, it may be necessary to make minor changes in process parameters to suit the formulation to the particular unit being used. This is a matter of routine experimentation, however, which is not related to the invention and which can be resolved by the practitioner on the particular unit.

As stated previously, the antistatic agent must be present on the surface of the film to be effective. Due to the polar quality of the antistatic agent, it tends, in time, to migrate to the film surface of its own accord. However, in commercial practice, it is customary to subject mill rolls of newly manufactured film to a heat aging step to stimulate the migration. Generally heat aging for about 8 to 24 hours at a temperature between 40 and 60°C is satisfactory.

A static propensity test has been developed to evaluate the antistatic property of the formulations of the invention. In this test, a strip of a biaxially oriented film 10 inches long by 2 inches wide by 0.0007 to 0.001 inch thick is drawn back and forth across an aluminum rod under a controlled tension until the entire length (excluding clipped ends) of the film has been contacted from one end to the other and back ten times (i.e., ten round trips). The maximum charge after ten round trips is recorded and also the amount (KV) by which it decays in the sixty seconds immediately following the end of the tenth round trip. Good antistatic properties are indicated by a) a low charge buildup, and b) a high rate of decay.

In the area of seal retention, the antistatic compositions of this invention are better than known hard resin-containing formulations with respect to this parameter. To be commercially useful it is usually required that the film remain sealed for 28 days at a temperature of about 52°C and retain at least 50% of its initial seal strength. Films based on the formulations of this invention are well within the requirements for seal retention. Here again, the decrease in wax content leads to the improvement. Formulations containing the standard wax content initially have undiminished heat seal strength. However, such seals usually fail within one week. Reduction of the wax level leads to seals which last four to five weeks.

The invention is illustrated by the following nonlimiting examples.

## Example 1

A polymer formulation was prepared consisting of the following:

| | |
|---|---|
| Polypropylene | 89 parts |
| Styrene resin | 11 parts |
| Clay | 0.4 parts |
| Phenolic antioxidant | 0.09 parts |
| Calcium stearate | 0.09 parts |
| GMB | 0.4 parts |

The polypropylene employed in this example was Profax$^R$ 6501 from HIMONT, Inc., Wilmington, Delaware; the styrene resin was an alpha-methyl styrene - vinyl toluene copolymer sold by Hercules Incorporated under the trademark Piccotex PS676; the GMB is a marine source behenic glyceride which contains about 45% of $C_{22}$ mono- and diesters.

The mass was compounded for two (2) minutes at ambient conditions followed by pelletization in a 1-1/4" Killion extruder with a die temperature of 264°C. The compounded polymer was thereafter cast into a film 30 mil thick and drawn 6X in each direction to effect biaxial orientation.

The biaxially oriented films were subjected to corona discharge treatment on both sides at 2.5 watts/ft.$^2$ min. at 70°C and then heat soaked for sixteen hours to develop their antistatic characteristics. Antistatic quality was then evaluated as follows:

1) The specimen was destaticized with a Simco Model D167RY static eliminator.

2) A static charge was developed on one side of the film by drawing the film over an aluminum rod as previously described and measuring the static charge on that surface immediately and again sixty seconds later.

The two sides of the film are arbitrarily designated "I" and "O" (inside and outside). The initial charge (numerator) and the amount dissipated (denominator) by the film in sixty seconds are reported.

Simultaneously a control film of a standard commercial formulation containing 1% of wax and no GMB was evaluated.

Static propensity of the films was as follows:

|   | Example 1 | Control |
|---|-----------|---------|
| I | -0.9/0.6  | -0.4/0  |
| O | -1.5/0.9  | -0.8/0  |

Heat seals were made in these films with a hot sealing bar at 121°C for two seconds at 20 psi. Seal strengths were measured immediately and again after storage at 52°C for various time periods.

## Seal Strength Retention

| Time | Example 1 I/I | Example 1 O/O | Control I/I | Control O/O |
|---|---|---|---|---|
| 0 days | 180 | 233 | 149 | 156 |
| 2 days | 138 | 172 | 250 | 180 |
| 7 days | 127 | 195 | 246 | 223 |
| 14 days | 159 | 148 | 133 | 108 |
| 21 days | 74 | 123 | 169 | 126 |
| 28 days | 93 | 140 | 136 | 164 |

Seal strengths were tested with a Sentinel Model 12ASC Heat Sealer per ASTM F88. Seal failures in all cases were cohesive film tears, i.e., the seal yielded by tearing the film.

## Example 2

Example 1 was repeated with 0.5% of GMB from rapeseed oil (40% $C_{22}$). In this case, different heat soak conditions were employed. Static propensity and seal strength retention measurements were as follows:

### Static Propensity

| Heat Soak Condition | Example 2 I | Example 2 O | Control I | Control O |
|---|---|---|---|---|
| 16 hrs. R.T. | -0.4/0 | -1.7/0 | -1.0/0 | -1.3/0 |
| 16 hrs. 55°C | 0.6/0.6 | -2.2/1.3 | 1.3/0 | 1.6/0 |
| 16 hrs. 60°C | -0.6/0.5 | -1.0/0.7 | -1.1/0 | -0.5/0 |

### Seal Strength Retention

| Time | Example 2 I/I | Example 2 O/O | Control I/I | Control O/O |
|---|---|---|---|---|
| 0 days | 144 | 141 | 119 | 140 |
| 3 days | 89 | 77 | 167 | 114 |
| 6 days | 66 | 31 | 181 | 131 |
| 14 days | 50 | 26 | 100 | 166 |
| 28 days | 45 | 50 | 74 | 17 |

## Example 3

The same formulation as in Example 2 was employed except that the clay content was decreased to 0.3%. A film of this formulation was found to have good antistatic properties as shown by the Static Propensity Test, following heat soak conditions of 16 hours at 55°C.

### Static Propensity

|   | Example 3 | Control |
|---|-----------|---------|
| I | -3.0/0.9 | 3.0/0.1 |
| O | -2.7/1.1 | 1.1/0 |

### Seal Strength Retention

| Time | Example 3 I/I | Example 3 O/O | Control I/I | Control O/O |
|------|-----|-----|-----|-----|
| 0 days | 241 | 151 | 241 | 190 |
| 4 days | 137 | 102 | 158 | 231 |
| 7 days | 93 | 31 | 202 | 164 |
| 14 days | 76 | 27 | 175 | 235 |
| 28 days | 149 | 39 | 139 | 221 |

## Example 4 & 5

A composition comprised of 89% polypropylene and 11% styrene - alpha-methyl styrene copolymer was formulated with 0.3% of clay, 0.09% of phenolic antioxidant, 0.09% of calcium stearate and 0.25 or 0.3% of rapeseed-based GMB. These formulations were extruded into a tubular film and biaxially oriented by inflation of the tubular film. Both formulations were subjected to corona discharge treatment on both surfaces, following which they were heat soaked at 50°C.

Films from both formulations were evaluated for static propensity and other parameters along with a control containing 1% wax rather than GMB.

| Example | | 4 | 5 | Control |
|---|---|---|---|---|
| GMB Content | | 0.3% | 0.25% | - |
| Heat Soak | | 10 hrs. | 20 hrs. | 16 hrs |
| Static Propensity | I | -3.4/1.9 | -2.1/1.9 | 2.9/0.2 |
| | O | -3.4/2.6 | -0.8/0.7 | 2.6/0.1 |
| Seal Initiation Temp. | I/I | 210 | 210 | 185 |
| | I/O | 200 | 200 | 185 |
| | O/O | 225 | 200 | 180 |

Seal initiation temperature is defined as that temperature at which peak seal strengths equal or exceed 225 g./in. The values of Examples 4 and 5, though higher than the commercial control, are commercially acceptable.

## Example 6

The formulation of this was the same as that of Example 5 except that it also included 0.55% of wax. The film prepared in this example was heat soaked for 16 hours at 50°C.

### Static Propensity

| | | Example 6 | Control |
|---|---|---|---|
| | I | -2.8/0.8 | -2.0/0 |
| | O | -2.9/0.6 | -0.8/0 |

1.   A film-forming propylene polymer composition suitable for preparing a heat sealable polypropylene film and containing a propylene polymer and about 9 to about 14% by weight of a hard resin, and optionally a hydrocarbon wax, characterized in that the composition comprises about 86 to about 91% by weight of polypropylene, about 9 to about 14% by weight of a hard resin, and about 0.05 to about 0.8 %, based on the weight of the composition, of a monoglyceride, a diglyceride, or a mixture of mono- and diglycerides, of behenic acid.

2.   A film-forming propylene polymer composition as claimed in claim 1, further characterized in that the glyceride of behenic acid derived from hydrogenated rapeseed oil that is glycerinated until it contains 50% of each of the mono- and diglycerides.

3.   A film-forming propylene polymer composition as claimed in claim 1, further characterized in that the composition contains up to about 0.8 % of a hydrocarbon wax.

4.   A film-forming propylene polymer composition as claimed in claim 1, further characterized in that the composition is free of hydrocarbon wax.

5.   A film-forming propylene polymer composition as claimed in any of the preceeding claims, further characterized in that the propylene polymer is propylene homopolymer.

6.   A biaxially oriented film comprising the propylene polymer composition as claimed in any of the preceeding claims.